# FASCICULE DE BREVET EUROPEEN

(11) **EP 2 795 773 B1**
(45) Date de publication et mention de la délivrance du brevet: **26.08.2020**
(21) Numéro de dépôt: 12810253.0
(22) Date de dépôt: 19.12.2012
(51) Int. Cl.: H02K 15/02, H02K 33/06, H02K 15/12

(54) **ACTIONNEUR VIBROTACTILE LINÉAIRE MINIATURE**
MINIATURISIERTER LINEARVIBRATOR
MINIATURE LINEAR VIBRATOR

(30) Priorité: 19.12.2011 FR 1161874
(43) Date de publication de la demande: 29.10.2014
(73) Titulaire: Sorbonne Université, 75006 Paris (FR); Centre National de la Recherche Scientifique, 75016 Paris (FR)
(72) Inventeur: HAYWARD, Vincent, 75013 Paris (FR); BERREZAG, Amir, 92160 Antony (FR); DIETZ, George, Newtonville, Massachusetts 02460-1311 (US)
(74) Mandataire: Lavialle, Bruno François Stéphane
(86) Numéro de dépôt international: PCT/EP2012/076230
(87) Numéro de publication internationale: WO 2013/092760

(56) Documents cités:
- EP-A2- 0 580 117
- JP-A- 2003 174 759
- JP-A- 2009 090 482
- US-A- 5 896 076

## Description

L'invention concerne un actionneur vibrotactile linéaire miniature et un procédé de fabrication d'un tel actionneur.

### ARRIERE-PLAN DE L'INVENTION

Des actionneurs vibrotactiles miniatures sont utilisés dans de très nombreuses applications industrielles, en particulier dans le domaine des interfaces haptiques, qui permettent à un être humain de recevoir une information transmise par une machine par la perception d'une sensation tactile.

Parmi ces interfaces haptiques, les interfaces haptiques à retour de force, utilisées en particulier dans des dispositifs de réalité virtuelle, fournissent à un utilisateur une sensation tactile correspondant à celle qui serait ressentie dans un environnement simulé par le dispositif. Les applications sont nombreuses : jeux vidéo, simulation de conduite ou de pilotage, simulation de chirurgie, etc.

D'autres interfaces haptiques ne sont utilisées que pour la transmission d'une alerte à un utilisateur, par exemple dans le cas d'un élément vibreur de téléphone mobile ou de tablette tactile par exemple.

Un enjeu majeur du développement de ces applications est la miniaturisation des actionneurs vibrotactiles. Ceux-ci transforment un signal électrique, généré par une machine quelconque (ordinateur, téléphone mobile, etc.), en un signal vibratoire perceptible par le toucher. Cette miniaturisation doit être accompagnée d'une amplitude de vibrations la plus importante possible. Les fréquences visées sont celles du domaine tactile, entre 20 Hz et 1000 Hz.

Lorsqu'une technologie à aimants permanents est choisie pour réaliser un actionneur vibrotactile linéaire (au détriment d'une technologie piézoélectrique par exemple), il est particulièrement intéressant d'utiliser un actionneur dit « sans fer ». Ces actionneurs comprennent un élément mobile dépourvu de dispositif de canalisation de lignes de champ magnétique et comportant au moins un aimant permanent, et un élément fixe comportant au moins une bobine électrique dans laquelle circule un courant électrique. Une force créée par le courant électrique et par un champ magnétique produit par l'aimant permanent génère un déplacement linéaire de l'élément mobile par rapport à l'élément fixe.

Les principaux avantages de ce type d'actionneur sont :
- un encombrement réduit,
- le poids important de l'élément mobile relativement à l'élément fixe, qui permet de créer des accélérations importantes, et donc de fortes vibrations,
- un faible nombre d'éléments qui composent l'actionneur, ce qui permet d'en réduire le coût.

La miniaturisation de ce type d'actionneur présente un certain nombre d'obstacles techniques. En particulier, il est difficile de générer un champ magnétique uniforme et d'intensité importante en l'absence de dispositif de canalisation des lignes de champ.

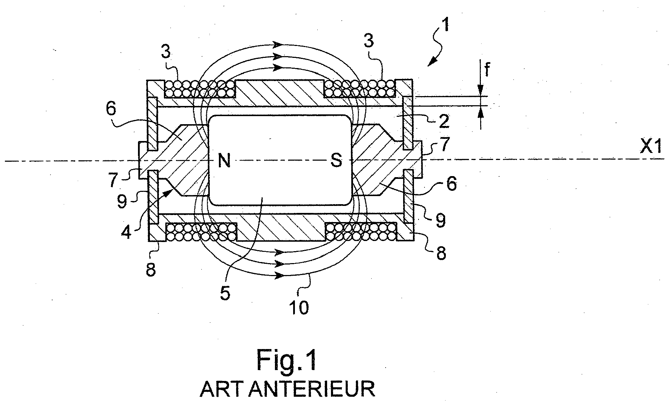

Pour illustrer cette difficulté, un actionneur vibrotactile de l'art antérieur est représenté à la figure 1. L'actionneur vibrotactile de l'art antérieur comporte un corps 1 de forme tubulaire définissant une cavité cylindrique 2 d'axe X1. Le corps 1 comporte deux bobines électriques 3 de fil conducteur disposées coaxialement à l'axe X1 en étant décalées axialement pour entourer la cavité cylindrique 2.

L'actionneur vibrotactile de l'art antérieur comporte par ailleurs un équipage mobile 4 de forme axisymétrique inséré avec un jeu faible à l'intérieur de la cavité cylindrique 2 pour pouvoir coulisser à l'intérieur de celle-ci. L'équipage mobile 4 comporte essentiellement un aimant permanent 5 dont l'enveloppe externe définit la forme cylindrique de l'équipage mobile 4 et ayant des polarités Nord (N), Sud (S) axiales, de sorte que le champ magnétique généré par l'aimant permanent 5 est de symétrie cylindrique. L'aimant permanent 5 est ici solidarisé à deux supports 6 s'étendant de part et d'autre de l'aimant permanent 5 pour présenter des extrémités 7 qui sont reliées à des extrémités 8 du corps 1 par des membranes élastiques 9 formant un moyen de rappel de l'équipage mobile 4 vers une position d'équilibre à l'intérieur du corps 1 en l'absence d'alimentation des bobines électriques 3. Les membranes élastiques 9 assurent en outre l'étanchéité de l'intérieur de la cavité cylindrique 2. Des lignes de champ 10 de l'aimant permanent 5 dans le plan de coupe sont illustrées sur la figure 1. Lorsque les bobines électriques 3 sont alimentées par un courant électrique alternatif, des forces de Laplace s'exercent sur les bobines électriques 3, induisant des forces opposées agissant sur l'équipage mobile 4 pour provoquer son déplacement linéaire alternatif dans le corps 1. Les accélérations alternatives subies par l'équipage mobile 4 lors de son déplacement alternatif créent les vibrations générées par l'actionneur vibrotactile de l'art antérieur.

Sur la figure, on constate que les lignes de champ 10 de l'aimant permanent 5 ne sont pas parallèles entre elles lorsqu'elles traversent les bobines électriques 3, de sorte que le champ magnétique généré par l'aimant permanent 5 n'est pas uniforme au voisinage des bobines électriques 3. En outre, seule une partie des lignes de champ 10 s'étendent radialement au voisinage des bobines électriques 3, de sorte que l'intensité de la force électromagnétique induite n'est pas maximale.

Le document EP 0 580 117 A2 désigne un autre type d'actionneur vibrotactile de l'art antérieur.

### OBJET DE L'INVENTION

L'invention vise à remédier aux inconvénients décrits ci-dessus, en proposant un actionneur vibrotactile linéaire miniature capable de générer des vibrations importantes dans le domaine des fréquences tactiles (20 Hz - 1000 Hz) ou supérieures dans le domaine acoustique. Il est divulgué un procédé de fabrication d'un tel actionneur.

### BREVE DESCRIPTION DE L'INVENTION

En vue de la réalisation de ce but, on propose un actionneur vibrotactile linéaire miniature conforme à la revendication 1.

Cette configuration d'aimants permanents permet de créer un champ magnétique sensiblement uniforme à symétrie radiale, dont les lignes de champ magnétique sont concentrées à l'emplacement des générateurs de force et s'étendent radialement au voisinage de ceux-ci, ce qui permet de maximiser l'intensité de la force électromagnétique induite par alimentation des générateurs de force.

On divulgue aussi un procédé de fabrication d'un actionneur tel que décrit ci-dessus. Ce procédé comporte au moins :
- une étape de placement des bobines de fil conducteur sur un noyau,
- une étape d'insertion des bobines électriques et du noyau dans un moule,
- une étape d'injection d'une matière dans le moule,
- une étape de durcissement de la matière,
- une étape d'extraction du deuxième élément formé par une partie de la matière durcie et comportant les bobines,
- une étape de destruction ou d'extraction du noyau,
- une étape d'insertion du premier élément à l'intérieur du deuxième élément.

D'autres caractéristiques et avantages de l'invention ressortiront à la lecture de la description qui suit d'un mode de réalisation particulier non limitatif de l'invention.

### BREVE DESCRIPTION DES DESSINS

Outre la figure 1 illustrant l'art antérieur et déjà décrite ci-avant, il sera fait référence aux figures des dessins annexés, parmi lesquelles :
- la figure 2 est une vue en perspective et en coupe d'un actionneur vibrotactile linéaire miniature à aimants permanents selon un premier mode de réalisation de l'invention,
- la figure 3 représente schématiquement des lignes de champ magnétique créées par deux aimants de l'actionneur de l'invention au voisinage d'une bobine de fil conducteur de l'actionneur de l'invention,
- la figure 4 est une vue en section d'un premier type de membrane élastique de l'actionneur de l'invention,
- la figure 5 est une vue en section d'un détail de l'actionneur de l'invention comprenant un second type de membrane élastique,
- les figures 6a, 6b, 6c, 6d, 6e illustrent des étapes de fabrication de l'actionneur de l'invention selon le procédé de fabrication de l'invention,
- la figure 7 est une vue en section d'un actionneur selon un second mode de réalisation de l'invention.
- la figure 8 est une vue en perspective de certains éléments de l'actionneur selon le second mode de réalisation de l'invention.

### DESCRIPTION DETAILLEE DE L'INVENTION

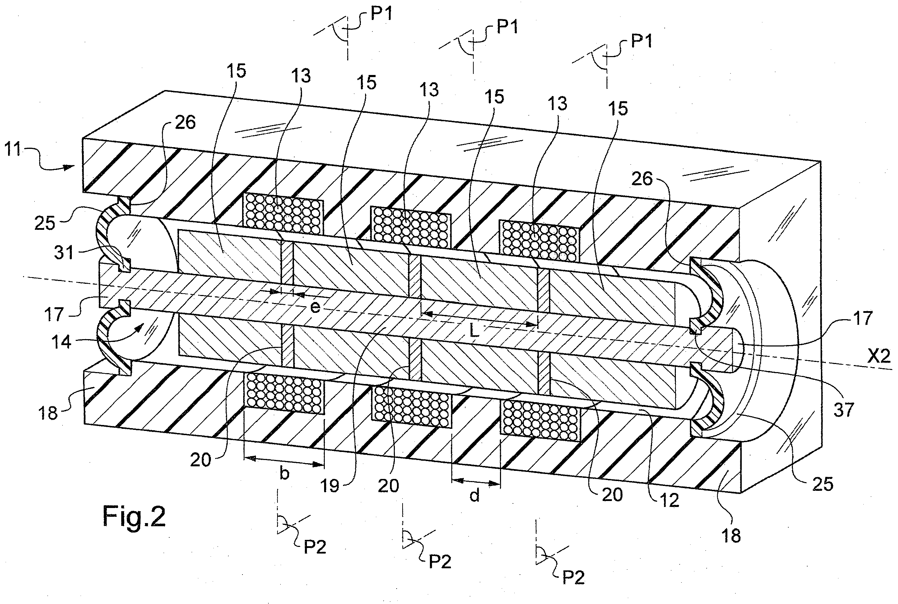

En référence à la figure 2, l'actionneur vibrotactile linéaire miniature à aimants permanents selon l'invention représenté comporte un corps 11 définissant une cavité cylindrique de section circulaire 12 d'axe X2. Le corps 11 comporte ici trois bobines 13 de fil conducteur disposées coaxialement à l'axe X2 en étant décalées axialement pour entourer la cavité cylindrique 12. Les bobines sont ici noyées dans une résine polymérisable formant le corps 11. Ici, chacune des bobines 13 définit un générateur de force magnétique dans lequel le fil conducteur constituant la bobine s'étend perpendiculairement à la direction de coulissement X2 (aux angles d'enroulement du fil conducteur près). Ici, l'ensemble du fil conducteur constituant chacune des bobines forme des brins qui s'étendent perpendiculairement à l'axe de coulissement et qui forment ensemble un générateur de force. Pour chaque bobine, et donc chaque générateur de force, il est possible de définir un plan médian P1 perpendiculairement à l'axe de coulissement X2 et passant sensiblement par le milieu du générateur.

L'actionneur de l'invention comporte par ailleurs un équipage mobile 14 de forme cylindrique inséré avec un jeu faible à l'intérieur de la cavité cylindrique 12 pour pouvoir coulisser à l'intérieur de celle-ci. L'équipage mobile 14 comporte ici quatre aimants permanents 15 de forme tubulaire juxtaposés et orientés de sorte que deux faces en regard de deux aimants adjacents aient des polarités identiques (Nord-Nord ou Sud-Sud). Les aimants permanents 15 sont maintenus alignés par une tige 19 réalisée en matériau amagnétique, en laiton par exemple. La tige 19 est insérée dans des évidements centraux des aimants permanents 15. Les aimants permanents 15 sont séparés par des rondelles 20 réalisées elles aussi en matériau magnétiquement perméable ou ferromagnétique doux, en fer doux par exemple.

La position des bobines 13, qui ici entourent les aimants permanents 15, permet une évacuation efficace de la chaleur créée par la dissipation de l'énergie par effet Joule qui se produit lorsqu'un courant circule dans le fil conducteur des bobines 13, de résistance non nulle.

Des extrémités 17 de la tige 19 de l'équipage mobile 14 sont reliées à des extrémités 18 du corps 11 par des membranes élastiques 25 qui guide l'équipage mobile 14 lors de son coulissement dans la cavité 12 du corps 11 et qui forment un moyen de rappel de l'équipage mobile 14 vers une position d'équilibre à l'intérieur du corps 11, en l'absence d'alimentation des bobines 13.

Tout comme pour l'actionneur de l'art antérieur décrit plus tôt, c'est l'alimentation des bobines 13 par un courant alternatif qui permet de créer des forces de Laplace sur les bobines 13 ce qui induit des forces opposées agissant sur l'équipage mobile 14 pour provoquer son déplacement linéaire alternatif dans le corps 11 de part et d'autre de la position d'équilibre. L'équipage mobile 14 de l'actionneur de l'invention représenté à la figure 2 se trouve dans cette position d'équilibre.

Les bobines 13 sont disposées dans le corps 11 selon un pas déterminé, qui est le même que le pas des aimants 15, c'est-à-dire que la somme des longueurs d'une bobine 13 et de la longueur d'un espace entre deux bobines adjacentes est égale à la somme de la longueur d'un aimant 15 et de la longueur d'une rondelle 20. On peut ainsi définir une succession de plans médians P2 entre deux aimants 15 adjacents qui passent sensiblement au milieu des rondelles 20 en étant perpendiculaires à l'axe de coulissement X2. On constate que le pas des plans médians P1 est égal au pas des plans médians P2.

Par ailleurs, dans la position d'équilibre illustrée ici, on constate que chaque plan médian P2 s'étend sensiblement au niveau d'un des plans médians P1 d'un générateur de force.

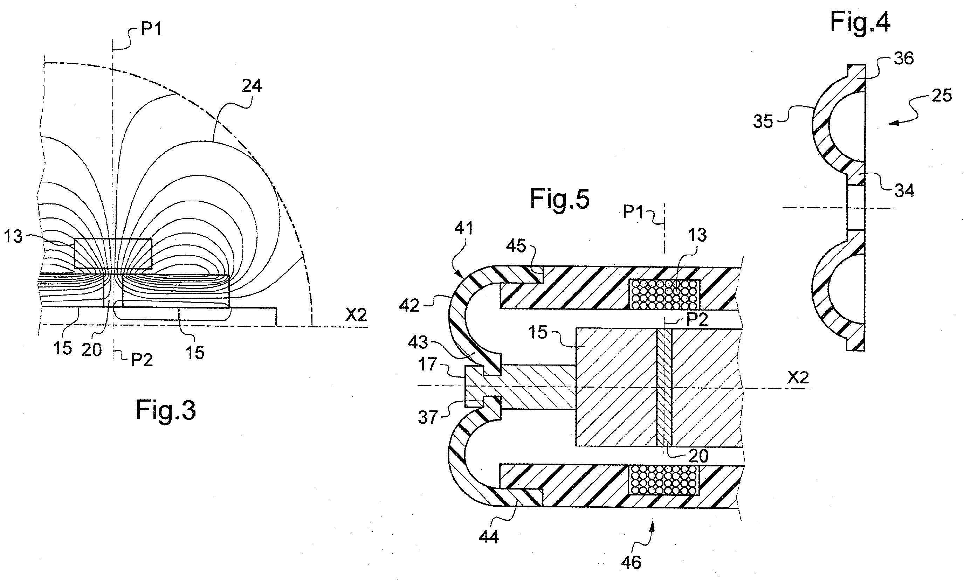

La figure 3 représente des lignes de champ magnétique 24 créées par deux aimants 15 au voisinage d'une bobine 13 de l'actionneur de l'invention, l'équipage mobile 14 étant dans la position d'équilibre décrite plus tôt. Les lignes de champ 24 ont été obtenues pour un ensemble optimisé de valeurs b, L, e (ici, b ≈ 4 mm, L ≈ 6 mm, e ≈ 0,5 mm), où b est la longueur d'une bobine, L la longueur d'un aimant 15, e la longueur d'une rondelle 20. La longueur d de l'espace entre deux bobines adjacentes se déduit de la relation d = L + e - b (ici, d ≈ 2,5 mm).

Lorsqu'elles traversent la bobine 13, les lignes de champ 24 sont sensiblement plus parallèles entre elles que pour l'actionneur de l'art antérieur représenté à la figure 1 (c'est-à-dire qu'un angle entre deux tangentes de deux lignes de champ 24 est plus proche de 0° qu'à la figure 1), et une partie plus importante des lignes de champ 24 s'étendent radialement au voisinage des bobines 13 (c'est-à-dire qu'une partie plus importante des tangentes des lignes de champ 24 sont perpendiculaires l'axe central X2 lorsqu'elles traversent la bobine). Dans cette configuration, la valeur maximale de l'intensité du champ magnétique créé au voisinage de la bobine 13 est d'environ 1,4 Tesla, pour des aimants Neodymium (NdFeB).

Cette valeur de champ est appréciable et conduit donc à la génération de forces de Laplace identiques à celles de l'art antérieur mais pour un courant d'alimentation plus faible. Alternativement, le même courant d'alimentation donne lieu à des forces de Laplace plus importantes, donc à des vibrations d'amplitude plus marquée.

On peut noter ici que les forces de Laplace permettant un mouvement de l'équipage mobile dans l'axe de cou lissement X2 sont générées sur toute la surface de la section rectangulaire de la bobine 13 représentée à la figure 3. Tous les enroulements de la bobine concourent à la génération de forces de Laplace sensiblement parallèles à l'axe coulissant X2, de sorte que l'ensemble de chaque bobine 13 constitue bien un générateur de force magnétique dans l'axe de coulissement de l'équipage mobile.

Généralement, pour des actionneurs de l'art antérieur de taille plus importante que l'actionneur de l'invention, les membranes de rappel sont des disques de caoutchouc découpés au laser. L'application de cette solution pour des actionneurs miniatures comme celui de l'invention présente les inconvénients suivants :
- les membranes doivent être suffisamment rigides pour maintenir correctement l'équipage mobile 14, ce qui implique de les fabriquer avec une certaine épaisseur, ou d'utiliser des matériaux particuliers,
- les membranes peuvent introduire des distorsions pour des déplacements linéaires d'amplitude importante.

Pour palier à cet inconvénient, des membranes élastiques 25 d'un premier type, visible à la figure 4, sont réalisées en élastomère moulé pour présenter une section semi-torique 35, ce qui permet d'obtenir la rigidité recherchée, une déformabilité axiale importante autorisant un déplacement linéaire d'amplitude importante, sous des distorsions sensiblement réduites.

La partie semi-torique 35 de la membrane 25 est encadrée par un bourrelet interne 34 et un bourrelet externe 36. Le bourrelet interne 34 de chaque membrane est engagé dans une gorge 37 réalisée sur l'extrémité 17 de la tige 19, tandis que le bourrelet externe 36 est appliqué contre un épaulement 26 du corps 11, de sorte que les membranes élastiques 25 forment des ressorts de rappel de l'équipage mobile 14 dans la position d'équilibre.

Des membranes élastiques 41 d'un second type sont représentées à la figure 5. Elles présentent une section semi-torique 42 encadrée par un bourrelet interne 43 et par un prolongement 44 de la section semi-torique 42. Le bourrelet interne est engagé dans la gorge 37, tandis que le prolongement 44 est appliqué contre un épaulement 45 d'un corps 46 d'actionneur de l'invention. Le corps 46 ne diffère du corps 11 que par la forme de l'épaulement.

Le corps 1 de l'actionneur de l'art antérieur représenté à la figure 1, présente une épaisseur f de matière autour de laquelle est enroulé le fil conducteur formant les bobines 3. Selon l'invention, au contraire, les bobines 13 sont directement en regard de l'équipage mobile 14 de sorte que le seul entrefer subsistant entre les bobines 13 et l'équipage mobile 14 soit constitué par le jeu de coulissement, ce qui a pour principaux avantages :
- de pouvoir réduire jusqu'à une fraction de millimètre la distance entre les bobines 13 et les aimants 15, ce qui permet d'augmenter l'intensité du champ magnétique au niveau des bobines électriques 13 (et donc la force électromagnétique à l'origine des vibrations générées par l'actionneur),
- de diminuer la masse de l'actionneur de l'invention,
- de diminuer la complexité et le coût de l'actionneur de l'invention.

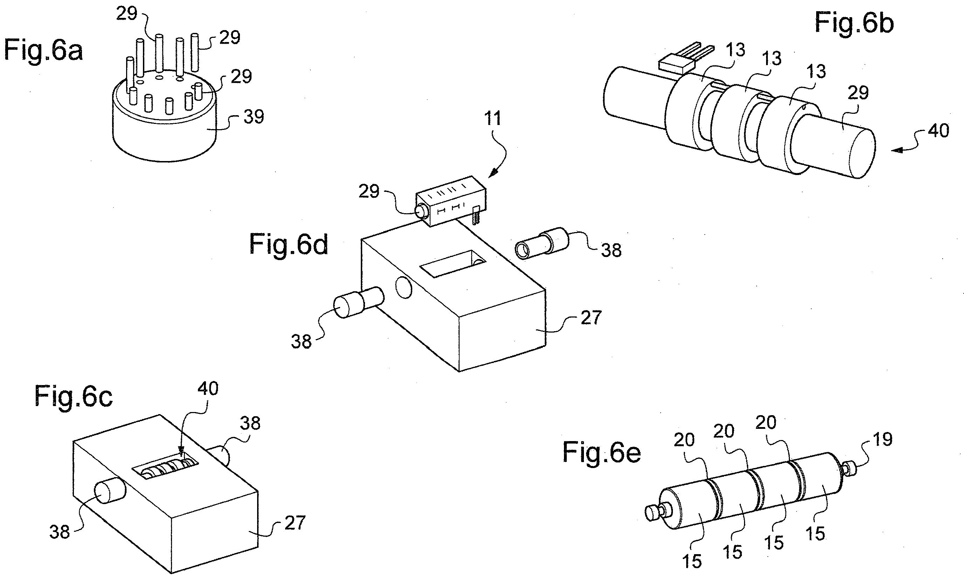

Pour fabriquer l'actionneur de l'invention, on propose un procédé de fabrication de cet actionneur, illustré aux figures 6a, 6b, 6c, 6d et 6e.

Le procédé de fabrication de cet actionneur de l'invention comporte les étapes suivantes :
- une étape de fabrication de noyaux 29, par exemple en plâtre, représentée à la figure 6a, qui consiste à verser du plâtre liquide dans un premier moule 39 en silicone, puis à extraire les noyaux 29 après une durée de séchage de quelques minutes,
- une étape de placement des bobines 13, représentée à la figure 6b, au cours de laquelle les bobines 13, avantageusement préfabriquées, sont installées autour d'un noyau 29 et connectées électriquement entre elles, formant un ensemble 40,
- une étape d'insertion de l'ensemble 40 formé par les bobines 13 et le noyau 29 dans un second moule 27, représentée à la figure 6c, l'ensemble 40 étant maintenu en position dans le second moule 27 grâce à deux bouchons 38,

- une étape d'injection de résine thermodurcissable dans le second moule 27,
- une étape au cours de laquelle le moule est porté à une certaine température permettant de durcir la résine,
- une étape d'extraction des bouchons 38 puis du corps 11, représentée à la figure 6d, le corps 11 contenant à cette étape le noyau 29,
- une étape de destruction du noyau 29 ou d'extraction de celui-ci,
- une étape de réalisation de l'équipage mobile 14 par placement des aimants permanents 15 et des rondelles 20 autour de la tige 19, représentée à la figure 6e,
- une étape au cours de laquelle une première membrane élastique 25 est rapportée sur une première extrémité 18 du corps 11, puis l'équipage mobile 14 est inséré à l'intérieur du corps 11, puis une seconde membrane élastique 25 est rapportée sur une seconde extrémité 18 du corps 11.

Il est donc possible d'obtenir simplement et à coût réduit un agencement des aimants 15 et des bobines 13 correspondant à la position d'équilibre décrite plus tôt, ainsi qu'une distance très faible entre les bobines 13 et les aimants 15 qui pourra être limitée au strict minimum requis pour assurer un jeu nécessaire au déplacement de l'équipage mobile 14 dans le corps 11.

Selon un mode particulier de mise en œuvre, le procédé de l'invention comporte une étape d'intégration dans l'actionneur de composants électroniques, un amplificateur de puissance miniature ou des composants permettant une commande numérique de l'actionneur par exemple. Avantageusement, ces composants seront noyés dans la résine ce qui, d'une part, facilite l'intégration de ces composants, et d'autre part, limite des contraintes mécaniques exercées sur ces composants lorsque l'actionneur vibre.

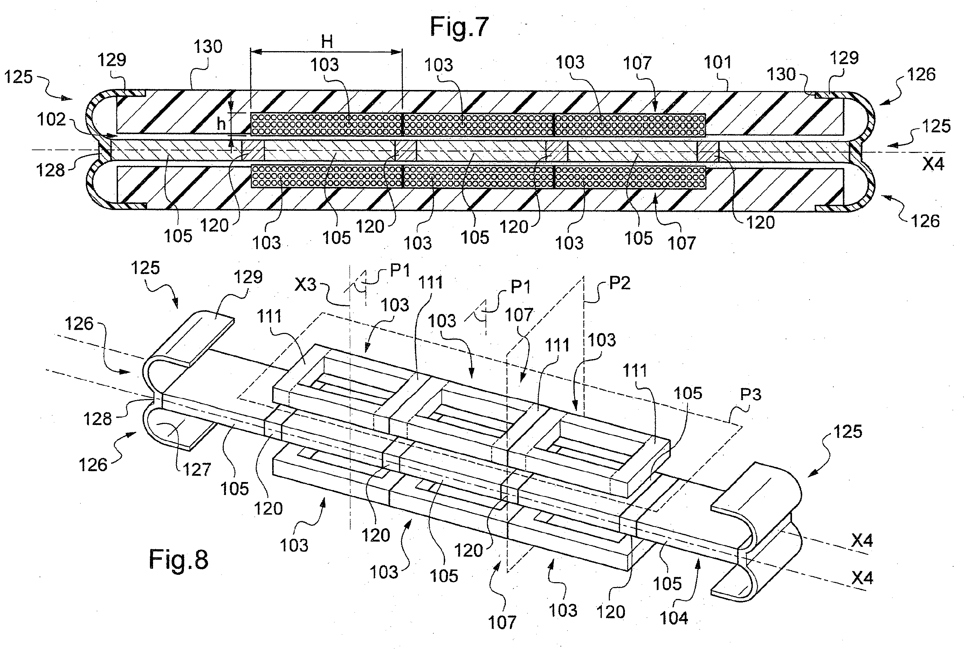

Selon un second mode de réalisation de l'invention, l'actionneur comporte des bobines et des aimants de forme non circulaire, de section rectangulaire par exemple. Un tel actionneur est représenté aux figures 7 et 8.

L'actionneur comporte un corps 101 définissant une cavité de section rectangulaire 102. Le corps 101 comporte six bobines 103 de fil conducteur de forme sensiblement parallélépipédique plate, ce qui signifie ici que la hauteur h d'une bobine 103 est beaucoup plus petite que sa largeur H. Les six bobines 103 sont réparties en deux ensembles 107 de trois bobines alignées. Dans chaque ensemble 107, les bobines 103 sont adjacentes et disposées dans un même plan P3 (représenté à la figure 8 en pointillés) de sorte que leurs axes principaux X3 soient perpendiculaires à ce plan P3. Les ensembles 107 s'étendent en définissant deux faces opposées de la cavité 102.

L'actionneur comporte par ailleurs un équipage mobile 104 de forme parallélépipédique inséré avec un jeu faible à l'intérieur de la cavité 102 pour pouvoir coulisser à l'intérieur de celle-ci selon une direction de coulissement X4. L'équipage mobile 104 est formé de cinq aimants permanents 105 de forme parallélépipédique plate alignés. Les aimants 105 sont séparés par des barres 120 réalisées en matériau magnétiquement perméable. Deux faces de deux aimants 105 en regard d'une même barre 120 ont des polarités identiques (Nord-Nord ou Sud-Sud). Les bobines 103 sont disposées dans le corps 101 selon un pas déterminé qui est le même que le pas des aimants 105.

Les lignes de champ, lorsqu'elles traversent les bobines, sont sensiblement parallèles à l'axe X3. Ici, les générateurs de force 111 sont constitués par les portions des bobines 103 dans lesquelles le fil conducteur présente des brins s'étendent perpendiculairement à l'axe X4 de coulissement. Quand deux bobines 103 sont accolées, lesdits brins des portions de fil conducteur des deux bobines qui s'étendent à proximité l'une de l'autre forment ensemble un générateur de force magnétique, dont le plan médian P1 passe entre les bobines. Pour les bobines d'extrémité, la portion extrémale de celles-ci constituée par les brins de fil conducteur qui s'étendent perpendiculairement à l'axe de coulissement X4 forme à elle seule un générateur de force magnétique.

En position d'équilibre, représentée aux figures 7 et 8, un plan médian P2 entre deux aimants adjacents (ici, P2, visible en pointillés à la figure 8, est un plan médian d'une barre 120) coïncide sensiblement avec le plan P1 d'un générateur en regard.

Comme les polarités de deux aimant adjacents sont opposées (Nord-Sud et Sud-Nord, ou Sud-Nord et Nord-Sud), il est préférable que les conducteurs électriques de deux bobines adjacentes d'un même élément soient parcourues par un courant de sens opposé. Ceci permet de générer dans l'actionneur une force de Laplace d'orientation uniforme.

Des membranes élastiques 125 d'un tel actionneur sont formées de deux lobes 126 de section semicylindrique 127 séparés par un élément intermédiaire 128 de section rectangulaire fixé à un aimant 105. Les lobes 126 comportent un prolongement 129 appliqué contre un épaulement 130 du corps 101.

Il est possible de réaliser un tel actionneur avec un moule similaire à celui représenté aux figures 6c et 6d, en utilisant cette fois un noyau de forme générale parallélépipédique. Les bobines ne sont bien sûr plus enfilées autour du noyau mais posées sur la surface de celui-ci.

L'invention n'est pas limitée au mode de réalisation particulier qui vient d'être décrit, mais, bien au contraire, couvre toute variante entrant dans le cadre de l'invention tel que définie par les revendications.

Bien que l'on ait choisi d'illustrer l'actionneur de l'invention selon le premier mode de réalisation avec quatre aimants et trois bobines, il est possible d'utiliser un nombre différent d'aimants et de bobines, la configuration la plus avantageuse étant de prévoir un nombre k de bobines et un nombre k+1 d'aimants, avec de préférence k impair.

Bien que l'on ait choisi d'illustrer l'actionneur de l'invention selon le second mode de réalisation avec cinq aimants et six bobines, il est possible d'utiliser un nombre différent d'aimants et de bobines, la configuration la plus avantageuse étant de prévoir un nombre k d'aimants (k au moins égal à trois) et n de bobines avec n = 2k-4.

De même, bien que l'on ait proposé des formes particulières de membranes, d'autres formes pourraient convenir. On peut ainsi par exemple prévoir une membrane munie de plis concentriques circulaires. On peut aussi prévoir une membrane ajourée par des fentes, de préférence en spirale, afin de rendre la membrane élastique dans la direction orthogonale à son plan.

Les dimensions données ici des bobines, des aimants et des rondelles résultent de simulations permettant d'optimiser lesdites dimensions pour un actionneur de forme et de dimensions extérieures recherchées particulières. Il est bien sûr possible de modifier ces dimensions tout en restant dans le cadre de l'invention, notamment si l'espace prévu pour accueillir l'actionneur est plus important, ou si on choisit d'utiliser un nombre différent d'aimants ou bobines dans le même espace.

En outre, bien que les aimants aient été choisis de dimensions identiques, de même que les bobines, il est possible d'utiliser des aimants et bobines de dimensions différentes, à condition toutefois que chaque rondelle de séparation des aimants se trouve sensiblement au niveau d'un plan médian de générateur d'effort en regard dans la position d'équilibre.

L'actionneur vibrotactile comporte donc un moteur électrique formé par un ensemble d'aimants et un ensemble de bobines parcourues par un courant électrique alternatif, et destiné à entraîner une partie mobile ici formée des aimants et de la tige. L'actionneur pourrait comporter plusieurs moteurs montés en « série », c'est-à-dire comprenant plusieurs ensembles d'aimants alignés et plusieurs ensembles de bobines alignées parcourues par des courants alternatifs distincts, chaque ensemble d'aimants coopérant avec un ensemble de bobines associé. En synchronisant ces moteurs, on peut augmenter sensiblement les niveaux de vibrations générées par l'actionneur vibrotactile. L'actionneur pourrait aussi comporter plusieurs moteurs montés « en parallèle », formant une matrice de moteurs.

## Revendications

1. Actionneur vibrotactile linéaire miniature comportant :
- un premier élément (14, 104) de forme générale cylindrique comprenant des aimants permanents (15, 105) alignés de sorte que deux faces adjacentes de deux aimants (15, 105) adjacents aient des polarités identiques ;
- un deuxième élément (11, 101) définissant une cavité cylindrique (12, 102) dans laquelle le premier élément (14, 104) est introduit avec un jeu pour y coulisser selon une direction de coulissement (X2), le deuxième élément (11, 101) comportant des bobines (13, 103) de fil conducteur ayant des brins qui s'étendent perpendiculairement à la direction de coulissement (X2) pour former des générateurs de force magnétique (13, 111), et qui sont disposés pour être en influence électromagnétique avec le premier élément (14, 104) ;
- des moyens de rappel et de guidage (25, 41, 125) du premier élément (14, 104) vers une position d'équilibre dans le deuxième élément (11, 101) pour laquelle un plan médian (P2) entre deux aimants adjacents coïncide sensiblement avec un plan médian (P1) d'un générateur de force (111) en regard,
**caractérisé en ce que** les moyens de rappel et de guidage (25, 41, 125) sont des membranes élastiques.

2. Actionneur selon la revendication 1, dans lequel les aimants permanents (15) et les bobines (13) sont de forme sensiblement tubulaire, la cavité (12) est de section circulaire, et les bobines (13) sont disposées pour entourer le premier élément (14).

3. Actionneur selon la revendication 2, dans lequel une partie d'une section d'au moins une membrane élastique (25) est de forme semi-torique.

4. Actionneur selon la revendication 2, dans lequel une partie d'une section d'au moins une membrane élastique (41) est de forme semi-circulaire.

5. Actionneur selon la revendication 1, dans lequel les aimants permanents (105) et les bobines (103) sont de forme sensiblement parallélépipédique plate s'étendant dans des plans parallèles, la cavité (102) est de section rectangulaire, et les bobines (103) sont agencées en deux ensembles (107) définissant deux faces opposées de la cavité.

6. Actionneur selon la revendication 5, l'actionneur étant de forme générale parallélépipédique plate.

7. Actionneur selon l'une des revendications 5 ou 6, dans lequel au moins une membrane élastique (125) comprend deux lobes de section de forme semi-circulaire.

8. Actionneur selon l'une des revendications précédentes, dans lequel au moins une membrane élastique est munie de plis concentriques et circulaires.

9. Actionneur selon l'une des revendications précédentes, dans lequel au moins une membrane élastique est ajourée.

10. Actionneur selon l'une des revendications précédentes, dans lequel les aimants permanents (15, 105) sont séparés par des éléments (20, 120) en matériau magnétiquement perméable ou ferromagnétique doux.

11. Actionneur selon l'une des revendications précédentes, dans lequel les bobines sont directement en regard des aimants permanents, de sorte que le seul entrefer subsistant entre les bobines et les aimants permanents soit constitué par un jeu de coulissement.

## Patentansprüche

1. Miniaturisierter vibrotaktiler Linearaktor, umfassend:
- ein erstes Element (14, 104) mit allgemein zylindrischer Form, das Dauermagneten (15, 105) umfasst, die so ausgerichtet sind, dass zwei angrenzende Flächen von zwei angrenzenden Magneten (15, 105) identische Polaritäten haben;
- ein zweites Element (11, 101), das einen zylindrischen Hohlraum (12, 102) definiert, in den das erste Element (14, 104) mit einem Spiel eingefügt ist, um dort in einer Gleitrichtung (X2) zu gleiten, wobei das zweite Element (11, 101) Spulen (13, 103) aus leitendem Draht mit Strängen umfasst, die sich senkrecht zur Gleitrichtung (X2) erstrecken, um Magnetkrafterzeuger (13, 111) zu bilden, und die so angeordnet sind, dass sie in elektromagnetischem Einfluss mit dem ersten Element (14, 104) stehen;
- Rückstell- und Führungsmittel (25, 41, 125) zum Rückstellen und Führen des ersten Elements in eine Gleichgewichtsposition in dem zweiten Element (11, 101), in der eine Mittelebene (P2) zwischen zwei angrenzenden Magneten im Wesentlichen mit einer Mittelebene (P1) eines gegenüberliegenden Krafterzeugers (111) zusammenfällt,
**dadurch gekennzeichnet, dass** die Rückstell- und Führungsmittel (25, 41, 125) elastische Membranen sind.

2. Aktor nach Anspruch 1, bei dem die Dauermagneten (15) und die Spulen (13) im Wesentlichen rohrförmig sind, der Hohlraum (12) einen kreisförmigen Querschnitt hat, und die Spulen (13) so angeordnet sind, dass sie das erste Element (14) umgeben.

3. Aktor nach Anspruch 2, bei dem ein Teil eines Querschnittes mindestens einer elastischen Membran (25) eine halbtorische Form hat.

4. Aktor nach Anspruch 2, bei dem ein Teil eines Querschnittes mindestens einer elastischen Membran (41) halbkreisförmig ist.

5. Aktor nach Anspruch 1, bei dem die Dauermagneten (105) und die Spulen (103) im Wesentlichen eine parallelepipedische flache Form haben und sich in parallelen Ebenen erstrecken, der Hohlraum (102) einen rechteckigen Querschnitt hat, und die Spulen (103) in zwei Gruppen (107) angeordnet sind, die zwei gegenüberliegende Flächen des Hohlraums definieren.

6. Aktor nach Anspruch 5, wobei der Aktor eine allgemein parallelepipedische flache Form hat.

7. Aktor nach einem der Ansprüche 5 oder 6, bei dem mindestens eine elastische Membran (125) zwei Lappen mit halbkreisförmigem Querschnitt umfasst.

8. Aktor nach einem der vorhergehenden Ansprüche, bei dem mindestens eine elastische Membran mit konzentrischen und kreisförmigen Falten versehen ist.

9. Aktor nach einem der vorhergehenden Ansprüche, bei dem mindestens eine elastische Membran durchbrochen ist.

10. Aktor nach einem der vorhergehenden Ansprüche, bei dem die Dauermagneten (15, 105) durch Elemente (20, 120) aus magnetisch durchlässigem oder weichem ferromagnetischem Material getrennt sind.

11. Aktor nach einem der vorhergehenden Ansprüche, bei dem die Spulen direkt gegenüber von Dauermagneten sind, so dass der einzige Luftspalt, der zwischen den Spulen und den Dauermagneten vorhanden ist, durch ein Gleitspiel gebildet ist.

## Claims

1. A miniature linear vibrotactile actuator comprising:
- a first element (14, 104) of generally cylindrical form comprising permanent magnets (15, 105) which are aligned in such a manner that two adjacent faces of two adjacent magnets (15, 105) have identical polarities;
- a second element (11, 101) which defines a cylindrical cavity (12, 102) in which the first element (14, 104) is introduced with play in order to slide therein in a sliding direction (X2), the second element (11, 101) comprising conductive wire coils (13, 103) having strands which extend perpendicularly to the sliding direction (X2) in order to form magnetic force generators (13, 111) and which are arranged to be in a state of electromagnetic influence with the first element (14, 104);
- return and guiding means (25, 41, 125) for the first element (14, 104) in a direction towards a position of equilibrium in the second element (11, 101) for which a center plane (P2) between two adjacent magnets substantially coincides with a center plane (P1) of a facing force generator (111),
**characterized in that** the return and guiding means (25, 41, 125) are resilient diaphragms .

2. The actuator as claimed in claim 1, wherein the permanent magnets (15) and the coils (13) are of substantially tubular form, the cavity (12) has a circular cross-section, and the coils (13) are arranged in order to surround the first element (14).

3. The actuator as claimed in claim 2, wherein a portion of a cross-section of at least one resilient diaphragm (25) is of a semi-toric form.

4. The actuator as claimed in claim 2, wherein a portion of a cross-section of at least one resilient diaphragm (41) is of a semi-circular form.

5. The actuator as claimed in claim 1, wherein the permanent magnets (105) and the coils (103) are of substantially parallelepipedal planar form and extend in parallel planes, the cavity (102) has a rectangular cross-section, and the coils (103) are arranged in two groups (107) which define two opposing faces of the cavity.

6. The actuator as claimed in claim 5, the actuator being of a generally parallelepipedal form.

7. The actuator as claimed in claim 5 or 6, wherein at least one resilient diaphragm (125) comprises two lobes having a semi-circular cross-section.

8. The actuator as claimed in one of the preceding claims, wherein at least one resilient diaphragm is provided with concentric and circular folds.

9. The actuator as claimed in one of the preceding claims, wherein at least one resilient diaphragm is open-worked.

10. The actuator as claimed in one of the preceding claims, wherein the permanent magnets (15, 105) are separated by elements (20, 120) of a magnetically permeable or soft ferromagnetic material

11. The actuator as claimed in one of the preceding claims, wherein the coils are located directly opposite the permanent magnets so that only a sliding gap is present between the coils and the permanent magnets.
